# DEMANDE DE BREVET EUROPEEN

(11) **EP 0 783 015 A1**
(43) Date de publication de la demande: **09.07.1997**
(21) Numéro de dépôt: 97400022.6
(22) Date de dépôt: 07.01.1997
(51) Int. Cl.: C08J 5/06, C08L 79/04

(54) **Microfibrilles de cellulose conductrices et composites les incorporant**

(30) Priorité: 08.01.1996 FR 9600133
(71) Demandeur: ELF ATOCHEM S.A., 92800 Puteaux (FR)
(72) Inventeur: Cavaille, Jean-Yves, 38640 Claix (FR); Flandin, Lionel, 73210 Aime (FR)

(57) **Abrégé**

On décrit des microfibrilles de cellulose rendues conductrices de l'électricité par un revêtement de polypyrrole, et leur procédé d'obtention sous forme de dispersions colloïdale. On les incorpore à des latex polymères à partir desquels il est possible de réaliser des composites auxquels les microfibrilles de l'invention communiquent leurs intéressantes propriétés de renfort et d'agents conducteurs de l'électricité.

## Description

La présente invention a trait à des matrices polymères renforcées de fibres cellulosiques, à leur élaboration sous forme de suspensions aqueuses, et à certaines de leurs utilisations.

L'industrie fait largement appel à des matériaux composites constitués d'une matrice polymère dont les propriétés, en particulier les propriétés mécaniques doivent être adaptées par incorporation de charges ou de renforts. Certains de ces matériaux composites sont élaborés à partir de latex copolymères et de fibres. En particulier, la demande de brevet FR-A-2.716.887 a divulgué des matériaux composites doués de propriétés mécaniques remarquables composés d'une matrice polymère et de microfibrilles monocristallines de cellulose. Pour différentes applications, par exemple les films polymères antistatiques, ou les nanocomposants redoutant les charges électrostatiques, il est apparu souhaitable de réaliser de semblables composites, mais avec de telles microfibrilles rendues conductrices de l'électricité. L'idée de base est de parvenir à ce résultat grâce à un revêtement de polymère conducteur, en l'occurrence de polypyrrole. Cette idée a été mise en pratique par exemple par H.H. Kuhn et all. pour le traitement de fibres textiles ("conductive textiles", Synthetic Metals, 28, 823-835, 1989), ou encore Ranjani V. Parthasarathy et Charles R. Martin sur la polymérisation de pyrrole sur des "patrons" de membranes microporeuses de polyester ou de polycarbonate (technique de track-etch, c'est-à-dire marquage puis attaque chimique, cf. "Synthesis of Polymeric Microcapsule Arrays and their Use for Enzyme Immobilisation", Nature, 369, 26/05/94, 298-301). Dans la présente invention, ce que l'on vise, ce sont des microfibrilles de cellulose dont on souhaite qu'elles conservent les caractéristiques remarquables des microfibrilles d'origine, à savoir leur facteur de forme élevé, et surtout leur aptitude à se disperser en solution colloïdale dans l'eau et à rester dispersées dans les suspensions aqueuses auxquelles on peut être amené à les ajouter. On nommera au sens de la présente invention de telles microfibrilles habillées de polymère conducteur "bâtons conducteurs," et plus simplement "bâtons".

L'invention fait appel à un recouvrement des particules par du polypyrrole (PPy) obtenu par polymérisation oxydante du pyrrole par le fer(lll). Les conditions à remplir sont les suivantes :
- le processus de recouvrement conducteur ne doit pas donner lieu à réaction en masse, mais au contraire recouvrir chaque microfibrille individuellement d'un film d'une épaisseur d'environ 10 à environ 100 nanomètres, de façon à éviter que la polymérisation ne crée des liens entre les bâtons, et que la propriété de suspension colloïdale stable soit conservée ;
- polymériser par voie chimique en milieu aqueux, les solvants organiques n'étant pas assez polaires pour maintenir une solution colloïdale stable.

Un nombre fantastique de microfibrilles est impliqué à chaque polymérisation. ll est très intéressant d'en fixer un ordre de grandeur. Ce qui est original dans le procédé peut se lire sur le tableau qui est donné ci-après : peu de matière, mais du fait de son caractère nanoscopique et de son facteur de forme élevé, correspondant à un nombre de microfibrilles et à une surface à recouvrir très importants. ll est établi sur la base de microfibrilles individuelles de 15 nm de rayon et de 1 µm de longueur, en quantité nécessaire pour charger 7 grammes d'un film de polymère à raison de 6% en poids. La colonne de droite rapporte le volume de polypyrrole nécessaire pour couvrir ces microfibrilles d'un film d'épaisseur égale à 35.10⁻⁹ m.

| | Microfibrilles | | | PPy |
|---|---|---|---|---|
| | Nombre | Surface totale (m²) | Volume total (m³) | Volume (m³) |
| 1 micro-fibrille | 1 | 0,13 10-12 | 0,31 10-21 | 1,8 10-21 |
| Microfib. pour 7g de film | 10¹⁵ | 100 | 0,25 10⁻⁶ | 1,5 10⁻⁶ |

Il est nécessaire, pour éviter une floculation en cours de polymérisation, d'opérer en solution très diluée de microfibrilles. Les microfibrilles initiales sont des microfibrilles individualisées de cellulose, dont la longueur moyenne est supérieure au micromètre, le diamètre est compris approximativement entre 2 et 30 nanomètres, le facteur de forme est supérieur à 60, et dont le taux de cristallinité est supérieur à 20%, préférentiellement supérieur à 70%. On préfère les microfibrilles de cellulose utilisées dans l'invention sont les microfibrilles issues de tuniciers, telles qu'on les obtient par le procédé décrit dans le brevet FR-A-2.716.887. On part d'enveloppes de tuniciers que l'on concasse et dilacère, puis qu'on blanchit dans un bain de potasse puis de chlorite, et dont on récupère la cellulose brute par filtration. Ces morceaux sont ensuite passés au mixeur, par exemple un WARING BLENDER. La suspension ainsi obtenue subit ensuite plusieurs cycles d'homogénéisation dans un homogénéisateur mécanique du type GAULIN 15M8TA. Une hydrolyse sulfurique casse les parties amorphes de la cellulose : on sépare ainsi les microfibrilles dont la dispersion finale est réalisée à l'aide d'ultrasons. Ce qu'on obtient ainsi est une suspension aqueuse colloïdale stable de microfibrilles, dont la stabilité est acquise grâce aux charges de surface SO⁴⁼ greffées sur la cellulose. De telles microfibrilles individualisées de cellulose, dont la longueur moyenne est supérieure au micromètre, le diamètre est compris approximativement entre 2 et 30 nanomètres, le facteur de forme est supérieur à 60, et dont le taux de cristallinité est supérieur à 20%, préférentiellement supérieur à 70%, recouvertes d'un film conducteur de polypyrrole d'épaisseur comprise entre environ 10 nanomètres et environ 100 nanomètres, sont nouvelles et sont l'un des objets de la présente invention.

On obtient les solutions colloïdales de bâtons selon l'invention par le procédé suivant. On dissout du pyrrole, de préférence fraîchement distillé dans une dispersion colloïdale aqueuse de microfibrilles de cellulose largement diluée par de l'eau distillée et maintenue à assez basse température (5 à 10°C), puis on y introduit un sel ferrique hydrosoluble, préférentiellement du chlorure ferrique. On peut tout aussi bien utiliser à sa place un autre oxydant de potentiel d'oxydation voisin de celui du couple Fe ^{III} / Fe ^{II}, tels des ions métalliques par exemple Ag⁺, Cu²⁺, encore l'eau oxygénée, l'ozone, la benzoquinone, ces derniers ayant l'avantage de ne pas générer de sels, mais ayant en contrepartie l'inconvénient de créer des cycles saturés de pyrrolidine dont on peut craindre qu'ils amoindrissent la conductivité finale du polymère. Il peut être intéressant d'incorporer à ce stade de l'acide naphtalène sulfonique (ANS) dont le rôle est de servir de contre-ion au polypyrrole, et qui aura pour effet de stabiliser le polymère quant à sa conductibilité dans le temps. On peut opérer à température ambiante. Il est préférable de travailler à une température comprise entre 0 et 5°C, conditions qui conduisent à des polymères de conductivité plus élevée. Après quelques heures de réaction, on sépare un flocculat qu'on lave pour éliminer le monomère excédentaire et les sels résiduels, qu'on remet en suspension dans de l'eau, puis en dispersion colloïdale en le soumettant aux ultrasons, en ajoutant le cas échéant une petite quantité d'un stabilisant qui peut être un épaississant, c'est-à-dire un dispersant stérique comme la méthylcellulose, ou un tensioactif par exemple le dodécylsulfate de sodium, qui conférera aux surfaces initialement hydrophobes de PPy une compatibilité de contact lors de leur mélange ultérieur avec des latex hydrophiles. On obtient ainsi des dispersions colloïdales de bâtons, dispersions noires, dont la mousse est également noire, ce qui est une signature de leur état colloïdal.

Ces suspensions colloïdales de bâtons sont très diluées. On peut les concentrer par dialyse face à du polyéthylèneglycol. Elles peuvent exister dans leur état colloïdal sur un domaine de concentration qui s'étend aisément jusqu'à 3% (au-delà, elles deviennent trop visqueuses). ll est également possible de les lyophiliser et de les remettre plus tard en dispersion colloïdale aqueuse par action d'ultrasons. C'est une propriété très étonnante, qui n'est pas attachée aux microfibrilles de cellulose d'origine.

Pour régler les quantités de réactifs à mettre en oeuvre, leurs rapports entre eux et leurs concentrations, on suit les principes directeurs suivants. Le rapport oxydant/monomère doit être voisin de 2,3 pour des raisons de stoechiométrie de la réaction de polymérisation, qui consomme effectivement 2,3 Fe⁺³ par molécule de pyrrole. La quantité de monomère pyrrole est étroitement liée à la surface à recouvrir parce qu'on veut polymériser en surface des fibres de cellulose et éviter absolument toute polymérisation en volume. Des concentrations préférées pour recouvrir des microfibrilles de tuniciers avoisinent la composition globale suivante

| | |
|---|---|
| microfibrilles | 0,01% (en poids) |
| pyrrole | 0,011M |
| sel ferrique | 0,025M |
| ANS | 0,004 M. |

On peut s'écarter de ces chiffres de quelques 50%, de manière homothétique, avec un degré raisonnable de certitude dans la réussite de l'opération.

On peut, à partir de ces dispersions colloïdales de bâtons, constituer des latex, qu'au sens de la présente invention, on désignera par "latex renforcés" des compositions aqueuses qui renferment en suspension à la fois un polymère et des microfibrilles conductrices individualisées de cellulose (bâtons conducteurs). Ce terme de "latex renforcés" est une image commode pour désigner des compositions dont le résidu qu'elles abandonneront par évaporation ou coagulation sera un mélange homogène de polymère et de bâtons, lesquels joueront entre autres un rôle de renfort du polymère. Ces latex renforcés résultent de leur mélange soigneux avec des suspensions de microfibrilles conductrices dans des proportions telles que le pourcentage du renfort dans le copolymère se situe à des valeurs convenables pour le développement des propriétés mécaniques et électriques du composite. Ces valeurs se situent raisonnablement entre environ 1% et 30% en poids de renfort (bâtons) par rapport à la matrice polymère. Par exemple, on forme des systèmes dont la matière sèche comportera approximativement 6 % de bâtons en mélangeant soigneusement 10 parties du latex à 50 % d'extrait sec polymère et 10 parties de la suspension de bâtons à 3 %.

Leur principal intérêt est qu'ils sont un véhicule très commode pour la matière que constitue le résultat final de leur évaporation et qui est une composition polymère chargée de façon uniforme et régulière de bâtons, dont les propriétés mécaniques, thermomécaniques et électriques sont tout à fait remarquables et inattendues (dans la suite, ces matériaux seront décrits sous le nom de matériaux ou films composites). Outre leur rôle de renfort et de conduction électrique de la matrice polymère, les microfibrilles apportent au latex renforcé lui-même une fonction épaississante appréciable dans les compositions aqueuses telles que peintures, encres, vernis conducteurs. On obtient des composites à partir des latex renforcés selon les différentes techniques d'évaporation de latex.

On obtient des films par évaporation de latex composites de polymères thermoplastiques. Cette évaporation doit être suffisamment lente pour éviter la formation de bulles. Les films ainsi obtenus, dits films évaporés, ont d'excellentes propriétés mécaniques, mais leur obtention nécessite des temps de séchage abusivement longs (un mois).

On peut aussi lyophiliser le latex composite de polymère thermoplastique ou non, et obtenir des composites par pressage vers 100°C de la poudre lyophilisée. Les propriétés mécaniques de tels films pressés sont amoindries par rapport à celles des films évaporés de composition comparable, mais l'opération ne prend que deux journées environ.

On peut aussi extruder en joncs la poudre sèche obtenue par lyophilisation, et mettre en forme le produit sous presse à 100°C. On peut de la même manière obtenir des films extrudés/pressés, dont les propriétés mécaniques sont incontestablement moins bonnes, mais dont la réalisation est industriellement plus acceptable que celle des films simplement pressés précédents. De la même façon, on peut former des plaques de composites par pressage de la poudre lyophilisée et des joncs extrudés précédents.

### Propriétés électriques.

On procède par essais de spectroscopie diélectrique, avec mesures de conductivité sur pont universel Hewlett Packart (H.P. 4284 A) entre 20 Hz et 1 MHz. La matrice présente un comportement de type diélectrique : on observe une relation linéaire entre le log. de la conductivité et le log. de la fréquence. Les bâtons quant à eux présentent une conductivité intrinsèque indépendante de la fréquence : ils se comportent comme des résistances pures.

Les films composites ont un comportement résistif à partir du moment où ils comportent 6% en poids de bâtons. Les films à moins de 3% ont un comportement capacitif.

### Propriétés mécaniques.

Leur étude est faite sur appareil de torsion dynamique (mécanalyseur Metravib Instruments) : pendule de torsion travaillant entre 100°K et 700°K, à des fréquences comprises entre 5 10⁻⁵ et 5 Hz. Les déformations subies sont comprises entre 10⁻⁶ et 10⁻⁴. La méthode permet d'étudier la chute des modules des produits themoplastiques à leur transition vitreuse. La matrice a un comportement classique de polymère amorphe. Les films composites ont de meilleures propriétés mécaniques, en particulier une moindre chute de leur module lors de leur transition vitreuse et un plateau caoutchoutique plus développé. Ces propriétés sont plus développées sur les films évaporés que sur les autres.

### EXEMPLES

### Exemple 1 : réalisation d'une solution colloïdale de bâtons

On charge un réacteur avec deux litres d'eau distillée maintenue à (5-10°C), puis on y introduit successivement et rapidement, sous agitation magnétique :
- 115 g d'une suspension colloïdale de microfibrilles de tuniciers concentrée à 1 % en poids préparée comme indiqué plus haut,
- 18 ml de pyrrole monomère.

On poursuit l'agitation jusqu'à dissolution complète des réactifs.

A part, on dissout dans 10 litres d'eau distillée :
- 48,6 grammes de chlorure ferrique anhydride,
- 8 grammes d'acide naphtalène sulfonique.

On introduit cette solution dans le réacteur qu'on ferme pour éviter tout entraînement de l'azéotrope pyrrole / eau. On laisse la polymérisation se produire sous une agitation magnétique juste suffisante pour maintenir le milieu homogène, pendant environ 10 heures en maintenant la température à 5 - 10°C.

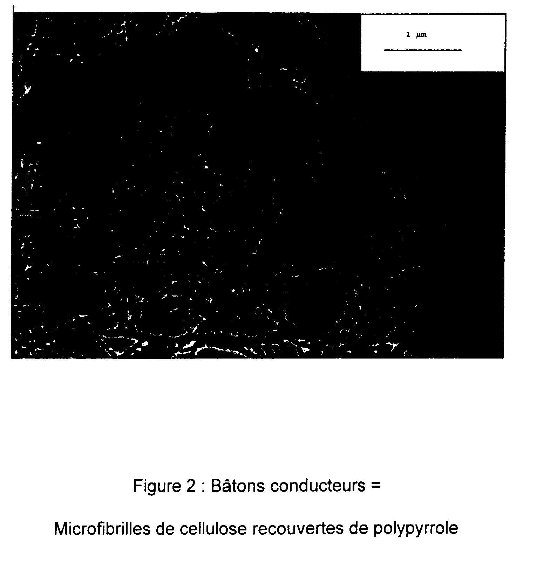

On passe alors le contenu du réacteur sur fritté N°1, et on lave abondamment ce qui y est retenu à l'eau distillée (environ 12 litres). On recueille ainsi une pâte noire très flocculante, dont les agrégats sont visibles à l'oeil nu, et qui sont constitués de bâtons de microfibrilles de habillées de polypyrrole (voir figure 2). On redisperse cette pâte dans suffisamment d'eau distillée pour obtenir une dispersion à 1,5% en poids de bâtons à laquelle on ajoute de la méthylcellulose à raison de 0,075 g par 100 grammes de ladite dispersion. On remet en dispersion colloïdale en soumettant cette dispersion par petites quantités d'environ 40 ml à l'action d'ultrasons (machine BRANSON Sonifier B-12) pendant une à deux minutes.

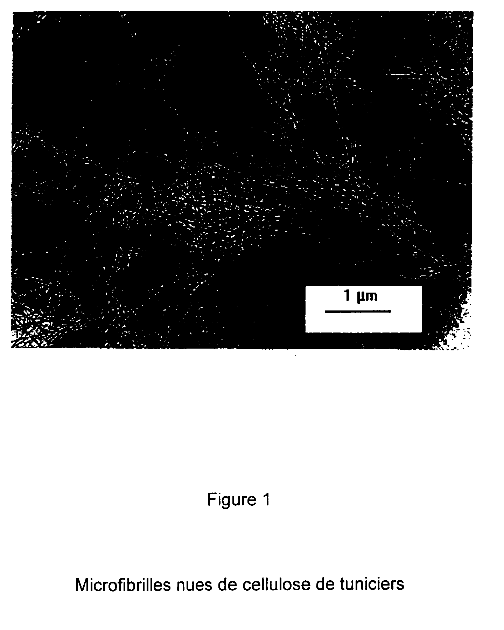

On obtient ainsi une solution colloïdale stable, qui a l'aspect d'une encre noire, et qui passe entièrement au travers d'un verre fritté n°3, de bâtons conducteurs de l'électricité à haut facteur de forme, haut module. (Se reporter à la figure 2, qui est leur image par microscopie électronique de transmission ; pour comparaison, voir la figure 1, qui est celle des microfibrilles de départ.)

### Exemple 2 : préparation de latex renforcé avec bâtons.

On a préparé un latex renforcé de bâtons de microfibrilles conductrices, à partir de la suspension de bâtons de l'exemple 1 et d'un latex à environ 50% d'extrait sec formé par polymérisation en émulsion de 34% de styrène, 64% d'acrylate de butyle, 1% d'acrylamide et 1% d'acide acrylique, I'amorceur utilisé étant le persulfate de potassium; le polymère correspondant présente une température de transition vitreuse Tg de 0°C.

### Exemple 3

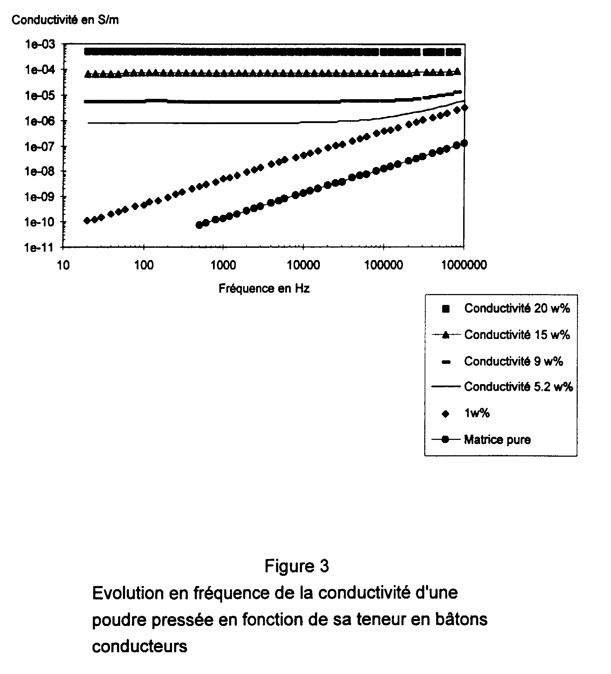

L'exemple relate par la figure 3 qui s'interprète d'elle-même, des résultats de conductivité obtenus sur poudres pressées obtenues à partir du latex de l'exemple 2 par lyophilisation, puis par double pressage à 100°C de la poudre lyophilisée, quinze minutes sous pression modérée, quinze minute sous 150 bars, en fonction d'un taux de bâtons évoluant de 0 (matrice pure) à 20% en poids. La matrice présente un comportement diélectrique typique. Le même comportement est observé pour un taux de chargement en bâtons de 1%. Au-delà, le comportement est pratiquement celui de résistances pures.

### Exemple 4

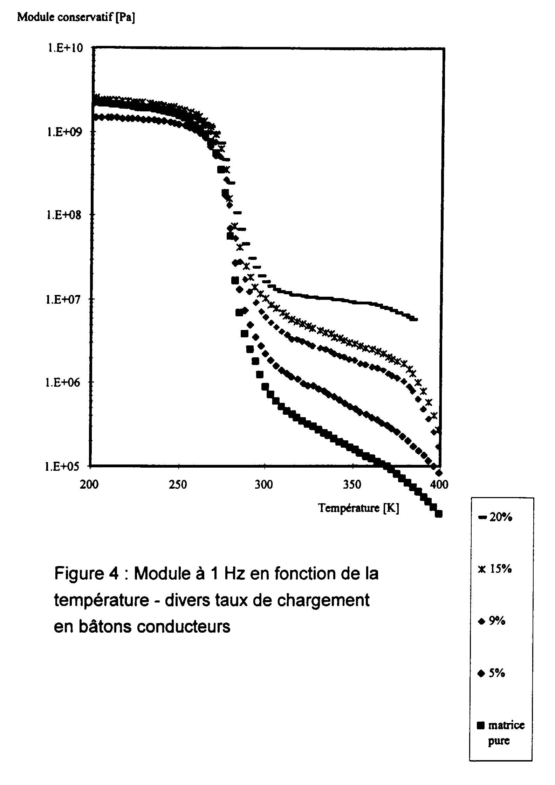

L'exemple relate, par sa figure 4 qui s'interprète d'elle-même, l'évolution du module sur les poudres pressées que de l'exemple 3, en fonction d'un taux de bâtons évoluant de 0 (matrice pure) à 20% en poids. Les mesures de module ont été faites à la fréquence de 1 Hz. On observe un comportement connu des matrices polymères chargées de microfibrilles (voir la demande française N°94 02315) : chute limitée du module au passage de la transition vitreuse, et développement du plateau caoutchoutique, très typique sur les poudres chargées à 20% de microfibrilles.

## Revendications

1. Microfibrilles individualisées de cellulose, dont la longueur moyenne est supérieure au micromètre, le diamètre est compris approximativement entre 2 et 30 nanomètres, le facteur de forme est supérieur à 60, et dont le taux de cristallinité est supérieur à 20%, préférentiellement supérieur à 70%, recouvertes d'un film conducteur de polypyrrole d'épaisseur comprise entre environ 10 nanomètres et environ 100 nanomètres.

2. Procédé pour obtenir des suspensions aqueuses stables de microfibrilles de cellulose recouvertes d'un film conducteur de polypyrrole telles que décrites dans la revendication 1, caractérisé en ce que
a) on disperse ou dissout dans de l'eau distillée :
une dispersion colloïdale aqueuse de microfibrilles de cellulose
du pyrrole
du chlorure ferrique
b) on laisse réagir le système à une température comprise entre environ 5°C et la température ambiante,
c) on lave les solides sur filtre à l'eau distillée
d) on disperse dans de l'eau distillée le produit recueilli en c) sous l'effet d'ultrasons,
le rapport molaire entre le chlorure ferrique et le pyrrole étant d'environ 2,3.

3. Dispersions aqueuses colloïdales de microfibrilles revêtues de polypyrrole telles que décrites dans la revendication 1, dispersions telles qu'on peut les obtenir selon le procédé décrit dans la revendication 2, caractérisée en ce que leur teneur en microfibrilles revêtues de polypyrrole s'étend jusqu'à environ 3%.

4. Compositions aqueuses comportant un latex polymère et une charge cellulosique caractérisées en ce que la charge cellulosique est constituée des microfibrilles revêtues de polypyrrole telles que décrites dans la revendication 1.

5. Compositions aqueuses selon la revendication 4, caractérisées en ce que le rapport pondéral entre les fibrilles et le polymère constitutif du latex polymère est compris entre environ 1% et environ 30% en poids.

6. Compositions comportant une matrice polymère et une charge cellulosique, caractérisées en ce que la charge cellulosique est constituée de microfibrilles telles que décrites dans la revendication 1.

7. Films de la composition selon la revendication 6, caractérisés en ce qu'on les obtient par évaporation d'une composition aqueuse stable de latex de polymère thermoplastique et de suspension aqueuse de microfibrilles tel que décrit dans les revendications 4 ou 5.

8. Poudres de la composition selon la revendication 6, caractérisées en ce qu'on l'obtient par lyophilisation d'une composition aqueuse stable de latex de polymère, thermoplastique ou non, et de suspension aqueuse de microfibrilles telle que décrite dans les revendications 4 ou 5.

9. Films de la composition selon la revendication 6, caractérisés en ce qu'on les obtient par pressage de la poudre telle que décrite dans la revendication 8.

10. Joncs de la composition selon la revendication 6, caractérisés en ce qu'on les obtient par extrusion d'une poudre selon la revendication 8.

11. Films de la composition selon la revendication 6, caractérisés en ce qu'on les obtient par pressage de joncs extrudés selon la revendication 10.

12. Plaques de la composition selon la revendication 6, caractérisées en ce qu'on les obtient par pressage de la poudre de la revendication 8 ou des joncs de la revendication 10.
